# EUROPEAN PATENT APPLICATION

(11) **EP 1 811 388 A1**
(43) Date of publication of application: **25.07.2007**
(21) Application number: 04792100.2
(22) Date of filing: 06.10.2004
(51) Int. Cl.: G06F 13/00, G06F 15/00

(54) **SYNCHRONIZING SYSTEM, AND SYNCHRONIZING PROGRAM**

(71) Applicant: SyncPlus, Inc., Tokyo 150-0011 (JP); Kawakita, Jun, Tokyo 150-0011 (JP)
(72) Inventor: KAWAKITA, Jun, Tokyo 150-0011 (JP)
(74) Representative: HOFFMANN EITLE
(86) International application number: PCT/JP2004/014744
(87) International publication number: WO 2006/038287

(57) **Abstract**

A synchronizing system and a synchronizing program capable of managing which of two or more computer terminals has elected to send contents when synchronized processing is to be done by the computer terminals. In the synchronizing system, a host-side computer terminal sends a content send request containing information for discriminating what computer terminal requested the content display, to a web server, receives the contents corresponding to the content send request, from the web server, and displays the contents in the host-side computer terminal. The host-side computer terminal includes host-side synchronizing means for sending the received contents to a guest-side computer terminal. This guest-side computer terminal includes guest-side synchronizing means for receiving the contents from the host-side computer terminal, and displays the received contents in the guest-side computer terminal.

## Description

### FIELD OF THE INVENTION

The present invention is related to a synchronizing system and a synchronizing program capable of managing in the web server side which terminal has elected to send contents when at least two or more computer terminals conduct a synchronizing process for displaying the same display.

### BACKGROUND OF THE INVENTION

There is a synchronization program for displaying on a plurality of computer terminals contents such as text and images, which are displayed on a web browser, as disclosed in the following patent reference #1.
In the case of the above-mentioned synchronization program, a host-side computer terminal obtains the contents from the web server through a session server, then it displays the contents on the host-side computer terminal, while a guest-side computer terminal obtains the contents thus obtained by the host-side computer terminal therefrom to enable both the host-side and guest-side computer terminals to synchronize the display of the same contents. For instance, the user of the host-side computer terminal (e.g., a computer operator) may be allowed to conduct the proxy input on the behalf of the user on the computer terminal (guest-side computer terminal) who is unfamiliar with the computer operation.
Patent reference #1: WO/2004/070616 international Publication Pamphlet

### DISCLOSURE OF THE INVENTION

### PROBLEM TO BE SOLVED BY THE INVENTION

When using such a synchronization program as stated above, only the host-side computer terminal obtains the contents from a web server. In this situation, the web server always recognizes only the host-side computer terminal, if the user of a guest-side computer terminal clicks a link, the guest-side computer terminal will send a content retrieval request to the host-side computer terminal, which then tries to retrieve the contents from the web server. Therefore the web server may recognize neither the presence nor the operation of the guest-side computer terminal.

In the case in which such a synchronization program is used for operating a customer call center, when the computer terminal operated by the operator in the call center is used as the host-side computer terminal, the computer terminal operated by a user is used as the guest-side computer terminal, and the operator in the call center tries to conduct the proxy input for the purchase of a commodity on the behalf of a user who wishes to purchase it from a web page, the web server always recognizes that it should be the host-side computer terminal that performs the operation, and thus recognizes that the host-side computer terminal (operator) should have pressed the button of purchase of a commodity. In such a situation, although the user must make the final decision of purchase of the commodity, the web server perceives that the operator has made the decision. This may cause a problem.

### MEANS FOR SOLVING THE PROBLEM

The inventor of the present invention has invented a synchronizing system and a synchronizing program, for solving the problems described above, by sending a content send request (HTTP request) along with the information about which computer terminal is performing the synchronization process, and which computer terminal is sending the display request of the contents at the time of sending the content send request (HTTP request) from the host-side computer terminal to the web browser.

The invention of Claim 1 is a synchronization system for synchronizing the contents stored in a web server between a host-side computer terminal and at least one or more guest-side computer terminals through at least one or more session servers, wherein the host-side computer terminal comprises host-side synchronization means for transmitting to the web server a send request of the contents including the information for identifying which of the computer terminals has made a content display request which is a request for displaying the contents on a computer terminal, for receiving the contents corresponding to the send request of the contents from the web server, and for transmitting the received contents to the guest-side computer terminal through session server, and the guest-side computer terminal comprises guest-side synchronization means for receiving the contents from the guest-side computer terminal through the session server, and for displaying the received contents on the guest-side computer terminal.

When transmitting a content send request from a host-side computer terminal to a web server, as is done in the present invention, the web server may manage which computer terminal has sent the request by sending along with the request the information for identifying which computer terminal has issued the content display request.

The invention of Claim 2 is the synchronization system [of the invention of Claim 1] (*1), wherein the host-side synchronization means includes in the content send request, information for identifying the host-side computer terminal or the user of the host-side computer terminal as the information for identifying which of the computer terminals has made the request when the input of the content display request has been received at the host-side computer terminal, and information for identifying the guest-side computer terminal or the user of the guest-side computer terminal as the information for identifying which of the computer terminals has made the request when the input of the content display request has been received at the guest-side computer terminal.

For the information to be included in the content send request for identifying which computer terminal has sent the request, it is preferable to use the information for identifying the computer terminal or the user thereof, as in the present invention.

The invention of Claim 3 is the synchronization system [of the invention of Claim 1 or 2], wherein the host-side synchronization means further includes in the content send request the information for identifying the host-side computer terminal or the user thereof and the information for identifying the guest-side computer terminal or the user thereof as the information of computer terminals running the synchronization process.

In order to manage by the web server which among computer terminals is performing the synchronization process, it is preferable to further include in the content send request the information for identifying the computer terminal or the user thereof on which the synchronization process is being performed, as in the present invention.

The invention of Claim 4 is a synchronization system for performing a synchronization process of the contents stored in a web server between a host-side computer terminal and at least one or more guest-side computer terminals through at least one or more session servers, wherein
the host-side computer terminal has host-side storage means for storing the contents, and host-side synchronization means consisting of host-side content transmitting and receiving means, host-side content retrieving means, and host-side update means;
the guest-side computer terminal has guest-side storage means for storing the contents, and guest-side synchronization means consisted of guest-side content transmitting and receiving means, guest-side content retrieving means, and guest-side update means;
the host-side content transmitting and receiving means is means for transmitting a send request of the contents including the information for identifying which of the computer terminals has made a content display request which is a request for displaying the contents on a computer terminal to the web server, for receiving the contents corresponding to the content send request from the web server to store in the host-side storage means, and for transmitting the contents to the guest-side synchronization means;
the host-side update means is means for notifying the host-side content retrieving means and the guest-side synchronization means of a content update event indicating that the host-side storage means has stored new contents;
the host-side content retrieving means is means for obtaining the contents stored in the host-side storage means, upon reception of the content update event, to display on the host-side computer terminal;
the guest-side content transmitting and receiving means is means for receiving the contents from the host-side synchronization means to store in the guest-side storage means;
the guest-side update means is means for notifying the guest-side content retrieving means of a content update event indicating that the guest-side storage means has stored new contents; and
the guest-side content retrieving means is means for obtaining the contents stored in the guest-side storage means, upon reception of the content update event, to display on the guest-side computer terminal.

The same technical effect as that obtained in the invention of Claim 1 can also be obtained in accordance with the present invention.

The invention of Claim 5 is the synchronization system [of the invention of Claim 4], wherein the host-side content transmitting and receiving means includes in the content send request the information for identifying the host-side computer terminal or the user of the host-side computer terminal as the information for identifying which of the computer terminals has made the request when receiving the input of the content display request at the host-side computer terminal, and the information for identifying the guest-side computer terminal or the user of the guest-side computer terminal as the information for identifying which of the computer terminals has made the request when receiving the input of the content display request at the guest-side computer terminal.

In the invention of Claim 4, the information for identifying the computer terminal or the user thereof is preferably used as in the present invention, in order to include the information in the content send request for identifying which computer terminal has sent the request.

The synchronization system according to the invention of Claim 6 is [the synchronization system according to the invention of Claim 4 or 5], wherein the host-side content transmitting and receiving means further includes the information for identifying the host-side computer terminal or the user thereof and the information for identifying the guest-side computer terminal or the user thereof as the information relating to the computer terminals running the synchronization process.

In the invention of Claim 4 and 5, the information for identifying the computer terminal performing the synchronization process or the user thereof into the content send request as in the present invention is preferably further included in order to manage by the web server which of the computer terminals is performing the synchronization process.

The invention of Claim 7 is a host-side computer terminal used in a synchronization system for running a synchronization process of the contents to be stored in a web server between a host-side computer terminal and at least one or more guest-side computer terminals through at least one or more session servers, wherein the host-side computer terminal comprising host-side synchronization means for transmitting to the web server the send request of the contents including the information for identifying which computer terminal has made the content display request which is a request for displaying the contents on a computer terminal, for receiving the contents corresponding to the send request of the contents from the web server, for displaying the contents on the host-side computer terminal, and for transmitting the received contents to the guest-side computer terminal through the session server; and the contents received from the host-side computer terminal being displayed on the guest-side computer terminal.

A host-side computer terminal of the synchronization system of the invention of Claim 1 may also be configured in accordance with configuration of the present invention, and a similar technical effect can be achieved.

The host-side computer terminal according to the invention of Claim 8 is [the host-side computer terminal according to the invention of Claim 8], wherein the host-side synchronization means includes in the contents the information for identifying the host-side computer terminal or the user of the host-side computer terminal as the information for identifying which of the computer terminals has made the request when receiving the input of the content display request at the host-side computer terminal, and the information for identifying the guest-side computer terminal or the user of the guest-side computer terminal as the information for identifying which of the computer terminals has made the request when receiving the input of the content display request at the guest-side computer terminal.

In the invention of Claim 7, the information for identifying the computer terminal or the user thereof is preferably used as the information to be included in the content send request for identifying which computer terminal has sent the request, as in the present invention.

The host-side computer terminal in the invention of Claim 9 is [the host-side computer terminal according to the invention of Claim7 and 8], wherein the host-side synchronization means further includes the information for identifying the host-side computer terminal or the user thereof and the information for identifying the guest-side computer terminal or the user thereof as the information on the computer terminals running the synchronization process.

In the invention of Claim 7 and 8, the information for identifying the computer terminal performing the synchronization process or the user thereof is preferably included in the content send request in order to manage by the web server which computer terminal is performing the synchronization process

The invention of Claim 10 of the present invention is a host-side computer terminal used in a synchronization system running a synchronization process of contents to be stored in a web server between a host-side computer terminal and at least one or more guest-side computer terminals through at least one or more session servers, wherein the host-side computer terminal has host-side storage means for storing the contents, and host-side synchronization means comprising host-side content transmitting and receiving means, host-side content retrieving means, and host-side update means; the host-side content transmitting and receiving means is means for transmitting to the web server a send request of the contents including the information for identifying which computer terminal has made a content display request which is a request for displaying the contents on a computer terminal, for receiving the contents corresponding to the send request of the contents from the web server to store in the host-side storage means, and for transmitting the contents to the guest-side synchronization means; the host-side update means is means for notifying the host-side content retrieving means and the guest-side synchronization means of a content update event indicating that the host-side storage means has stored new contents; the host-side content retrieving means is means for retrieving the contents stored in the host-side storage means, upon reception of the content update event, to display on the host-side computer terminal; and the contents received from the host-side computer terminal being displayed on the guest-side computer terminal.

The host-side computer terminal of the synchronization system in the invention of Claim 4 may also be configured in accordance with the configuration of the present invention to achieve a similar technical effect.

The host-side computer terminal in the invention of Claim 11 is [the host-side computer terminal according to the invention of Claim10], wherein the host-side content transmitting and receiving means includes the information for identifying the host-side computer terminal or the user of the host-side computer terminal as the information for identifying which of the computer terminals has made the request when receiving the input of the content display request at the host-side computer terminal, and the information for identifying the guest-side computer terminal or the user of the guest-side computer terminal as the information for identifying which of the computer terminals has made the request when receiving the input of the content display request at the guest-side computer terminal.

In the invention of Claim 10, the information for identifying a computer terminal or the user thereof is preferably used in the manner of the present invention in relation to the information to be included in a content send request, for identifying which computer terminal has sent the request.

The host-side computer terminal in the invention of Claim 12 is [the host-side computer terminal according to the invention of Claim 10 or 11], wherein the host-side content transmitting and receiving means further includes in the content send request the information for identifying the host-side computer terminal or the user thereof and the information for identifying the guest-side computer terminal or the user thereof as the information on the computer terminals running the synchronization process.

In the invention of Claim 10 or 11, information for identifying a computer terminal performing the synchronization process or the user thereof is preferably included in the content send request to manage by the web server which computer terminal is performing the synchronization process.

A invention of Claim 13 of the present invention is a synchronization program, comprising a host-side synchronization program and a guest-side synchronization program, for executing a synchronization process of the contents to be stored in a web server, between a host-side computer terminal and at least one or more guest-side computer terminals through at least one or more session servers, wherein the host-side computer terminal comprises host-side storage means for storing the contents, and host-side processor unit means for executing the processing by loading the host-side synchronization program; the guest-side computer terminal comprises guest-side storage means for storing the contents, and guest-side processor unit means for executing the processing by loading the guest-side synchronization program; the host-side synchronization program comprises a host-side content transmitting and receiving function, a host-side content retrieving function, and a host-side update function, to be loaded in the host-side processor unit; the guest-side synchronization program comprises a guest-side content transmitting and receiving function, a guest-side content transmitting and receiving function, and a guest-side update function, to be loaded in the guest-side processor unit; the host-side content transmitting and receiving function is a function for transmitting to the web server a send request of the contents including the information for identifying which computer terminal has made a content display request which is a request for displaying the contents on a computer terminal, for receiving the contents corresponding to the send request of the contents from the web server to store in the host-side storage means, and for transmitting the contents to the guest-side computer terminal; the host-side update function is a function for notifying the host-side content retrieving function and the guest-side computer terminal of a content update event indicating that the host-side storage means has stored new contents; the host-side content retrieving means is a function for retrieving the contents stored in the host-side storage means upon reception of the content update event to display on the host-side computer terminal; the guest-side content transmitting and receiving function is a function for receiving the contents from the host-side computer terminal to store in the guest-side storage means; the guest-side update means is a function for notifying the guest-side content retrieving means of a content update event indicating that the guest-side storage means has stored new contents; the guest-side content retrieving means is a function for retrieving the contents stored in the guest-side storage means upon reception of the content update event to display on the guest-side computer terminal.

The synchronization system as described above may also be configured as a program as is in the present invention. In such a case, the synchronization system may comprise a host-side synchronization program for performing the processing on the host-side computer terminal and a guest-side synchronization program for performing the processing on the guest-side computer terminal. The host-side synchronization program and the guest-side synchronization program may be running on their respective different computer terminals such that each respective computer terminal is served as the host-side computer terminal or guest-side computer terminal, however these programs may be executed on a single computer terminal for processing so that computer terminal functions as both the host-side computer terminal and the guest-side computer terminal.

In this case, a computer terminal may function as a host-side computer terminal in a synchronization process session and may function as a guest-side computer terminal in another synchronization process session. This selection may be made when logging in to the session server.

In addition, the synchronization program may function in the form of a plug-in coupled to a web browser or other known display means, which is provided to the computer terminal.

In the invention of Claim 14 of the present invention is the synchronization program of the invention of Claim13, wherein the host-side content transmitting and receiving function further includes in the content send request the information for identifying the host-side computer terminal or the user of the host-side computer terminal as the information for identifying which of the computer terminals has made the request when receiving the input of the content display request at the host-side computer terminal, and the information for identifying the guest-side computer terminal or the user of the guest-side computer terminal as the information for identifying which of the computer terminals has made the request when receiving the input of the content display request at the guest-side computer terminal.

In the invention of Claim 13, the information for identifying the computer terminal or the user thereof is preferably used in the manner of the present invention, in relation to the information to be included in the content send request, for identifying which of the computer terminals has sent the request.

The synchronization program of the invention of Claim 15 is the synchronization program according to the invention of Claim 13 and 14, wherein the host-side content transmitting and receiving function further includes in the content send request the information for identifying the host-side computer terminal or the user thereof and the information for identifying the guest-side computer terminal or the user thereof as the information on the computer terminals running a synchronization process.

In the invention of Claim 13 or 14, the information for identifying the computer terminal performing the synchronization process or the user thereof is preferably included in the content send request in the manner of the present invention in order to manage by the web server which computer terminal performs the synchronization process.

The invention of Claim 16 of the present invention is a recording medium on which the synchronization program set forth in any of the invention of Claim 13 to the invention of Claim 15 is stored.

The synchronization program may be loaded into the CPU or other processing unit of a computer terminal by downloading from a predetermined server, or alternatively be stored on a CD, DVD, or other recording medium, and is loaded therefrom into the CPU or other processing unit of each computer terminal.

The invention of Claim 17 of the present invention is a host-side synchronization program for operating a host-side computer terminal for executing a synchronization process of the contents to be stored in a web server between the host-side computer terminal and at least one or more guest-side computer terminals through at least one or more session servers, wherein the host-side computer terminal has host-side storage means for storing the contents, and host-side processor unit means for executing the processing by loading the host-side synchronization program; the host-side synchronization program comprises a host-side content transmitting and receiving function, a host-side content retrieving function, and a host-side update function to be loaded into the host-side processor unit; the host-side content transmitting and receiving function is a function for transmitting to the web server a send request of the contents including the information for identifying which computer terminal has made a content display request which is a request for displaying the contents on a computer terminal, for receiving the contents corresponding to the content send request from the web server to store in the host-side storage means, and for transmitting the contents to the guest-side computer terminal; the host-side update function is a function for notifying the host-side content retrieving function and the guest-side computer terminal of a content update event indicating that the host-side storage means has stored new contents; the host-side content retrieving function is a function for retrieving the contents stored in the host-side storage means, upon reception of the content update event, to display on the host-side computer terminal; the guest-side content transmitting and receiving function is a function for receiving the contents from the host-side computer terminal to store in the guest-side storage means; and the contents received from the host-side computer terminal being displayed on the guest-side computer terminal.

By providing a configuration in the manner of the present invention, a host-side synchronization program for operating the host-side computer terminal may be configured to achieve a similar technical effect in the synchronization program of the invention of Claim 13.

The invention of Claim 18 is the host-side synchronization program of the invention of Claim 17, wherein the host-side content transmitting and receiving function includes in the content send request the information for identifying the host-side computer terminal or the user of the host-side computer terminal as the information for identifying which of computer terminals has made the request when receiving the input of the content display request at the host-side computer terminal, and the information for identifying the guest-side computer terminal or the user of the guest-side computer terminal as the information for identifying which of the computer terminals has made the request when receiving the input of the content display request at the guest-side computer terminal.

In the invention of Claim 17, the information for identifying the computer terminal or the user thereof is preferably used in the manner of the present invention in relation to the information included in the content send request, for identifying which of the computer terminals has sent the request.

The invention of Claim 19 is the host-side synchronization program of the invention of Claim 17 or 18, wherein the host-side content transmitting and receiving function further includes the information for identifying the host-side computer terminal or the user thereof and the information for identifying the guest-side computer terminal or the user thereof as the information on the computer terminals running the synchronization process.

In the invention of Claim 17 or 18, the content send request preferably includes the information for identifying the computer terminal performing the synchronization process or the user thereof in the manner of the present invention in order to manage by the web server which computer terminal performs the synchronization process.

The invention of Claim 20 is a recording medium on which the synchronization program set forth in any of the invention of Claim17 to the invention of Claim 19 is stored.

The host-side synchronization program as described above may be loaded into CPU or other processing means of a host-side computer terminal by downloading from a predetermined server, or it may alternatively be stored on a CD, DVD, or other recording medium, and is loaded therefrom into the CPU or other processing unit of a host-side computer terminal.

### EFFECT OF THE INVENTION

The configuration in accordance with the present invention allows the web server to manage which computer terminals are conducting a synchronization process, and differentiates which of computer terminal has issued a content display request. For example, when a customer call center is implemented by using the synchronization program, the server may recognize which computer terminal has made the final decision of purchase of a commodity, allowing trouble to be prevented.

By using the present invention, the web server may record the history for each computer terminal or each user that refers to the contents and to analyze the entries of the history to ascertain the preference of each individual, thereby allowing the user to be presented with specially offered items and to encourage the purchase of the next forthcoming commodity.

### BRIEF DESCRIPTION OF THE DRAWINGS

FIG 1 is a system overview schematically illustrating an example system arrangement in accordance with the present invention;
FIG. 2 is a flowchart illustrating an example process flow in accordance with the present invention;
FIG. 3 is a flowchart illustrating an example process flow in accordance with the present invention;
FIG 4 is a schematic diagram illustrating the information for identifying the computer terminal performing the synchronization process and the information for identifying the computer terminal having sent the content display request, which are to be included in a content send request;
FIG. 5 is a typical example of content send request including the information for identifying the computer terminal performing the synchronization process and the information for identifying the computer terminal having sent the content display request; and
FIG 6 is a typical example of a content send request including the information for identifying the computer terminal performing the synchronization process and the information for identifying the computer terminal having sent the content display request.

### KEY

1: Synchronization system
1 a: Host-side synchronization means
1b: Guest-side synchronization means
2: Web server
3: Host-side computer terminal
4: Guest-side computer terminal
5: Session server
5a: First session server
5b: Second session server
6: Host-side content transmitting and receiving means
7: Host-side content retrieving means
8: Host-side update means
9: Host-side storage means
10: Guest-side content transmitting and receiving means
11: Guest-side content retrieving means
12: Guest-side update means
13: Guest-side storage means

### BEST MODE FOR CARRYING OUT THE INVENTION

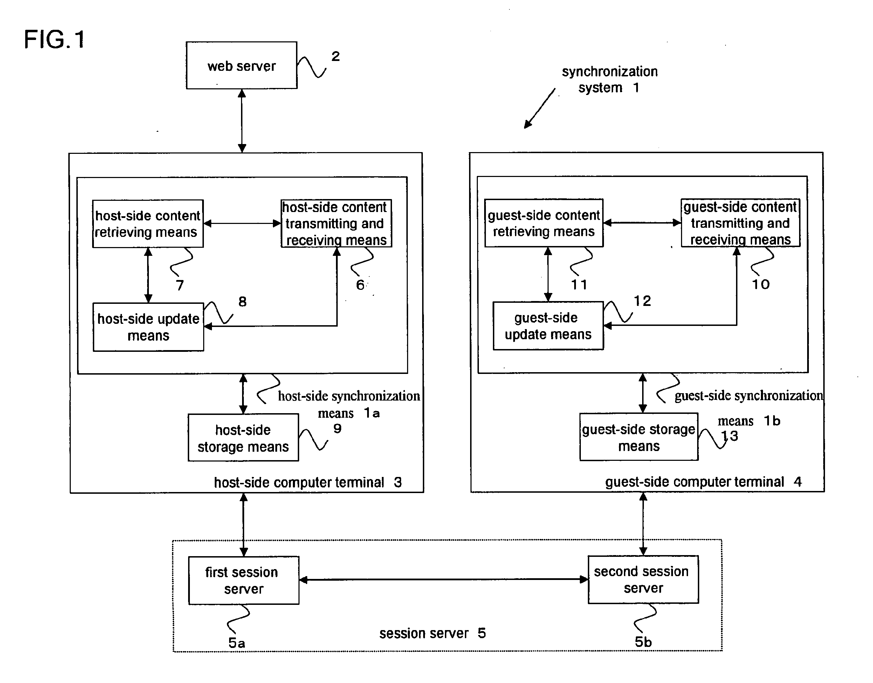

An example of a system arrangement of a synchronization system 1 in accordance with the present invention will be described in greater detail with reference to the system overview diagram shown in FIG 1. The synchronization system 1 has host-side synchronization means 1 a in a host-side computer terminal 3 which performs the synchronization process through a session server 5 and guest-side synchronization means 1 b in a guest-side computer terminal 4. As used herein the term host-side computer terminal 3 (host-side synchronization means 1a) is a computer terminal for receiving the contents from a web server 2 in the synchronization process, and the term guest-side computer terminal 4 (guest-side synchronization means 1 b) is a computer terminal for receiving the contents from the host-side computer terminal 3 (host-side synchronization means 1 a) in the synchronization process. Although there is one guest-side computer terminal 4 as used herein, there may also be a plurality of guest-side computer terminals 4.

The web server 2 is a server for sending the contents corresponding to the content send request from the host-side synchronization means 1 a. The contents include text data, image data, audio data, and various other types of data. A typical example of contents is that of a web site.

The host-side computer terminal 3 and the guest-side computer terminal 4 are computer terminals for performing the synchronization process through the session server 5, each having a host-side synchronization means 1 a / a guest-side synchronization means 1b, respectively. The host-side synchronization means 1a in the host-side computer terminal 3 transmits the content send request to the web server 2 and receives the appropriate contents from the web server 2. The means also transmits thus received contents to the guest-side computer terminal 4 through the session server 5. The guest-side synchronization means 1b in the guest-side computer terminal 4 receives the contents stored in or displayed on the host-side computer terminal 3 from the host-side computer terminal 3 through the session server 5 and displays on the guest-side computer terminal 4 to perform the synchronization process.

In the description, for the clarity of each means and process in the host-side synchronization means 1 a and the guest-side synchronization means 1b, each means is shown as a separate system, however, preferably in practice, the computer terminal for performing the synchronization process may have both the host-side synchronization means 1 a and the guest-side synchronization means 1b so as to be served as either host side or guest side. In such a case, the same functionality included in both the host-side synchronization means 1a and the guest-side synchronization means 1b may be shared. The host-side synchronization means 1 a and the guest-side synchronization means 1b may be operated as a plug-in of a known display means such as a web browser previously provided in the host-side computer terminal 3 and the guest-side computer terminal 4.

The session server 5 is a computer terminal which, upon reception of a connection request from the host-side synchronization means 1a and the guest-side synchronization means 1b, establishes a session between the host-side computer terminal 3 and the guest-side computer terminal 4 after the terminals login to the session server (session server 5 as used herein may also be a conventional computer terminal or a computer device (such as a router or a hub) rather than a server). In the description, the case will be described in which the session server 5 for establishing a session with the host-side computer terminal 3 is referred to as a first session server 5a, and the session server 5 for establishing a session with the guest-side computer terminal 4 is referred to as a second session server 5b, and a session is established between the first session server 5a and the second session server 5b, for establishing the session between the host-side computer terminal 3 and the guest-side computer terminal 4. However the host-side computer terminal 3 and the guest-side computer terminal 4 may establish a session over the same session server 5.

The host-side computer terminal 3 has host-side storage means 9 and host-side synchronization means 1 a.

The host-side storage means 9 is a means for storing the contents received via host-side content transmitting and receiving means 6 (described later) on a recording medium such as a cache, a memory, or a hard disk, and the host-side synchronization means 1 a comprises host-side content retrieving means 7, host-side content transmitting and receiving means 6, and host-side update means 8.

The host-side content retrieving means 7 is means which, upon reception of a content display request from the user of the host-side computer terminal 3 (a request for displaying, for example, the contents on the computer terminal by inputting a URL or selecting a link) obtains the appropriate contents from the host-side storage means 9 to display the contents on the host-side computer terminal 3 by using a known display means such as a web browser.

The host-side content retrieving means 7 is also means which, upon reception of a content update event (described later) from the host-side update means 8 (described later), obtains the appropriate contents from the host-side storage means 9 to display the contents on the host-side computer terminal 3 by using a known display means such as a web browser.

When the contents requested by the host-side content retrieving means 7 is not present in the host-side storage means 9, the host-side content transmitting and receiving means 6 will send a content send request to the web server 2 in order to obtain the contents via the web server 2, then will receive the contents corresponding to the content send request from the web server 2 to store in the host-side storage means 9.

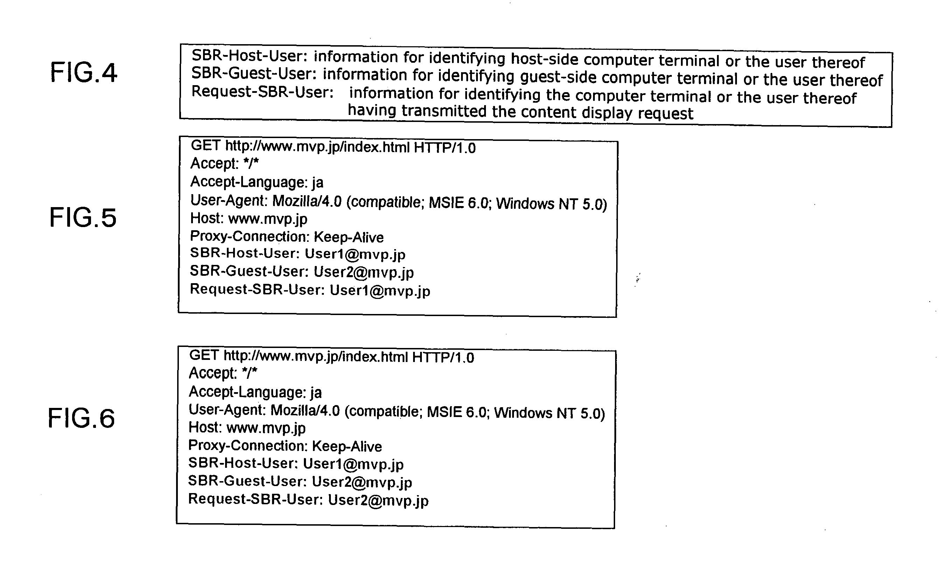

The host-side content transmitting and receiving means 6 will transmit along with the content send request (HTTP request) to the web server 2 the information for identifying which computer terminal is performing the synchronization process, and which computer terminal has issued the content display request, (examples of the information include an identifier of hardware of a computer terminal, an ID used by a computer terminal or a user when logging in to the session server 5, a mail-address, and an IP address). The information included in the content send request is shown in FIG 4. The identifying information as described above may be automatically obtained from the hardware or software of a computer terminal, or the user is prompted to input at the time of login to the session server 5 and the information received by the input may be used for the identifying information. In the following preferred embodiment the information is the ID used for login to the session server 5.

The information for identifying the guest-side computer terminal 4 or the user thereof may be transmitted to the host-side computer terminal 3 by way of the session server 5 after the information is obtained on the guest-side computer terminal 4 in the manner described above. Alternatively, the information for identifying the host-side computer terminal 3 and the guest-side computer terminal 4 or the user thereof may be stored in the session server 5 in which the session is established and may be obtained from the session server 5.

In the information shown in FIG 4, information for identifying the host-side computer terminal 3 that is performs the synchronization process is recorded to the right of "SBR-Host-User," while the information for identifying the guest-side computer terminal 4 that performs the synchronization process is recorded to the right of "SBR-Guest-User." There may be a plurality of rows of "SBR-Guest-User" if there is a plurality of guest-side computer terminals 4. Noted to the right of "Request-SBR-User" is the information for identifying the computer terminal that has sent the content display request, namely the host-side computer terminal 3 or the guest-side computer terminal 4, which computer terminal received the input of URL or input of selection of a link by the user for browsing the contents. If the user of the host-side computer terminal 3 issues a content display request, then the information for identifying the host-side computer terminal 3 will be noted to the right of "Request-SBR-User," otherwise if the user of the guest-side computer terminal 4 issues the content display request then the information for identifying the guest-side computer terminal 4 will be noted therein. It is apparent that the identifying information described above may not have entry information for identifying the computer terminal or the user thereof at the right side thereto.

The web server 2 may manage between which computer terminals the synchronization process is running, and which computer terminal issues the content display request by reading out the information described above included in the content send request.

For example, the web server 2 will recognize the host-side computer terminal 3 or the user thereof in the synchronization process by obtaining the identifying information noted to the right side of "SBR-Host-User;" the web server 2 will recognize the guest-side computer terminal 4 or the user thereof in the synchronization process by reading out the identifying information noted to the right of "SBR-Guest-User," or the web server 2 will recognize the computer terminal or the user thereof that has issued the content display request by retrieving the identifying information noted to the right side of "Request-SBR-Usec"

The host-side content transmitting and receiving means 6 is also means which, when receiving the content send request from the guest-side synchronization means 1b by way of the session server 5 (first session server 5a, second session server 5b), extracts the appropriate contents from the host-side storage means 9 to transmit to the guest-side computer terminal 4 via the session server 5 (first session server 5a, second session server 5b).

The host-side update means 8 is means which, when the host-side storage means 9 has stored new contents, notifies the host-side content retrieving means 7 and the guest-side synchronization means 1b of a content update event indicating that new contents have been stored. It is also a means which receives a content update event from the guest-side synchronization means 1b through the session server 5 (first session server 5a, second session server 5b) to notify the host-side content retrieving means 7. A content update event preferably contains, in addition to the fact that the contents have been updated, the information that indicates of the location of the contents, such as URL or file location.

The guest-side computer terminal 4 has guest-side storage means 13 and guest-side synchronization means 1b.

The guest-side storage means 13 is means for storing the contents received via a guest-side content transmitting and receiving means 10 (described later) in a cache, memory, hard disk, or other storage medium, and the guest-side synchronization means 1b comprises guest-side content retrieving means 11, guest-side content transmitting and receiving means 10, and guest-side update means 12.

The guest-side content retrieving means 11, similar to the host-side content retrieving means 7 of the host-side synchronization means 1 a, is means which, when receiving a content display request from the user of the guest-side computer terminal 4 (e.g., input of an URL or selection of a link), retrieves the appropriate contents from the guest-side storage means 13 (described later), and displays the contents on the guest-side computer terminal 4 by means of known display means such as a web browser.

In addition, the guest-side content retrieving means 11 is means which, when receiving a content update event (described later) from the guest-side update means 12 (described later), retrieves the appropriate contents from the guest-side storage means 13 to display the contents on the guest-side computer terminal 4 by means of known display means such as a web browser.

The guest-side content transmitting and receiving means 10 is means which transmits the content send request to the host-side synchronization means 1a of the session through the session server 5 (first session server 5a, second session server 5b) if the contents requested by the guest-side content retrieving means 11 is not present in the guest-side storage means 13, receives from the host-side synchronization means 1a the contents received by the host-side synchronization means 1a from the web server 2 and stored in the host-side storage means 9, and stores the contents in the guest-side storage means 13.

The guest-side update means 12 is means which, when the guest-side storage means 13 has stored new contents, notifies the guest-side content retrieving means 11 and the host-side synchronization means 1a of a content update event indicating that new contents have been stored. It is also a means that receives the content update event from the host-side synchronization means 1 a to notify the guest-side content retrieving means 11 of the event.

### FIRST EMBODIMENT

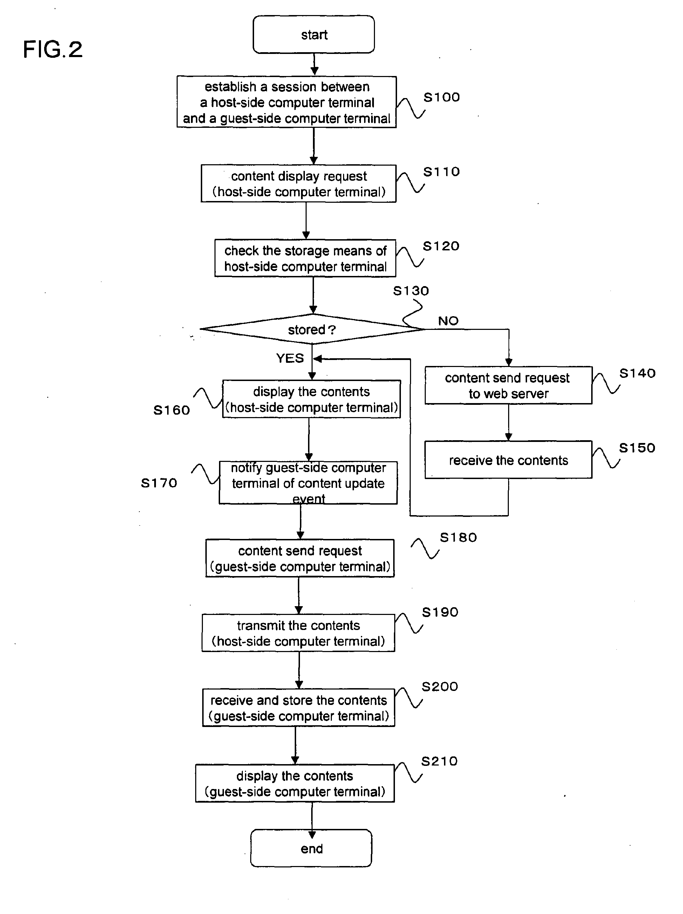

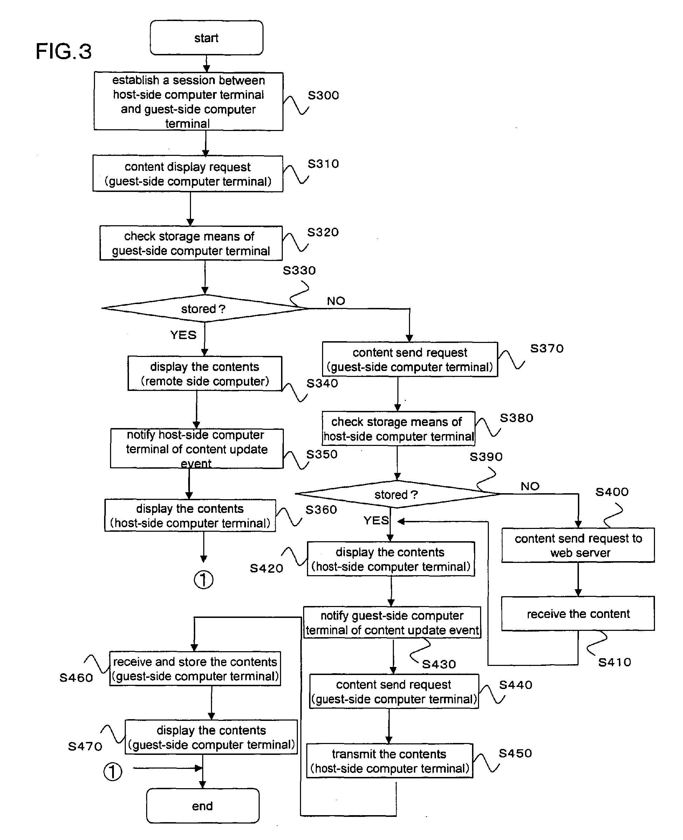

The process flow of the synchronization system 1 in accordance with the present invention will be described in greater detail with reference to flowcharts shown in FIGS. 2 and 3 as well as the system overview of FIG 1.

Now an example will be described in which a content display request is transmitted from the host-side synchronization means 1 a to the web server 2 when a synchronization process is performed between the host-side synchronization means 1 a and the guest-side synchronization means 1b.

To perform the synchronization process, the respective users of the host-side computer terminal 3 and the guest-side computer terminal 4 have to log in from their respective synchronization system 1 (host-side synchronization means 1a, guest-side synchronization means 1 b) to the session server 5, so that a session will be established in the session server 5 between the host-side computer terminal 3 as the host side of the synchronization process and the guest-side computer terminal 4 as the guest side of the synchronization process (S100). More specifically, a session will be established between the host-side computer terminal 3 and the first session server 5a, another session will be established between the guest-side computer terminal 4 and the second session server 5b, then still another session will be established between the first session server 5a and the second session server 5b so as to establish a session between the host-side computer terminal 3 and the guest-side computer terminal 4.

When the user of the host-side computer terminal 3, for example, inputs a URL or selects a link, the host-side content retrieving means 7 receives input of content display request of the input URL or link (S110). The content display request causes the host-side content retrieving means 7 of the host-side synchronization means 1 a to check to see whether the host-side storage means 9 of the host-side computer terminal 3 stores the contents corresponding to the input URL or link (S120).

If the host-side storage means 9 does not store the appropriate contents (S130), then the host-side content transmitting and receiving means 6 of the host-side synchronization means 1a will transmit a content send request (HTTP request if the contents are in HTTP format) to the web server 2 corresponding to the input URL or selected link from the host-side synchronization means 1a (S140). The content send request is sent as shown in FIG 4, the content send request (HTTP request) including the information that identifies the computer terminals in which the synchronization process is running, and which computer terminal (host-side computer terminal 3 or guest-side computer terminal 4) has sent the content display request.

In relation to the information shown in FIG 4, a typical case is shown in FIG 5 in which the information for identifying the host-side computer terminal 3 is "User1 @mvp.jp," the information for identifying the guest-side computer terminal 4 is "User2@mvp.jp," the computer terminal that has issued the content display request is "User1@mvp.jp," and the content send request is requesting the transfer of the contents having a URL "http://www.mvp.jp/index.html" from the web server 2 to the host-side computer terminal 3.

In step S140 the web server 2 having received the content send request transmitted from the host-side synchronization means 1a will extract the contents corresponding to the content send request to send them to the host-side synchronization means 1 a. At the time when receiving the content send request, the web server 2 will store the information for identifying between which computer terminals the synchronization process is running and which computer terminal (host-side computer terminal 3, guest-side computer terminal 4) has issued the content display request. By doing this the server may manage what contents are sent to which computer terminal, and which computer terminal (host-side computer terminal 3, guest-side computer terminal 4) requested the content display request.

In the case of the content send request shown in FIG. 5, the web server 2 will see "User1@mvp.jp" to the right of "SBR-Host-User," and recognize that the host-side computer terminal 3 or the user thereof in the synchronization process is "User1@mvp.jp"; the server will see "User2@mvp.jp" to the right of "SBR-Guest-User" then recognize that the guest-side computer terminal 4 or the user thereof in the synchronization process is "User2@mvp.jp"; and the server will see the string "User1 @mvp.jp" to the right of "Request-SBR-User" then recognize that the input of the content display request is received in "User1 @mvp.jp" in the same synchronization process. The server will also recognize that the contents subject to the synchronization process is "http://www.mvp.jp/index.html." The web server 2 then will store the information thus identified.

When the host-side content transmitting and receiving means 6 of the host-side synchronization means 1 a receives the contents transmitted from the web server 2 (S150), then the host-side content transmitting and receiving means 6 will store the contents in the host-side storage means 9.

Since the host-side storage means 9 has stored new contents, the host-side update means 8 will notify the host-side content retrieving means 7 of a content update event, the host-side content retrieving means 7 receiving the event in tum will retrieve the appropriate contents from the host-side storage means 9 to display the contents on the host-side computer terminal 3 by means of known display means such as a web browser (S160). The host-side update means 8 will further notify of a content update event the guest-side synchronization means 1b through the session server 5 (first session server 5a, second session server 5b) (S170).

If the contents are present in the host-side storage means 9 as the result of confirmation in step S120, then the host-side content retrieving means 7 will obtain the appropriate contents from the host-side storage means 9 to display on the host-side computer terminal 3 by using known display means such as a web browser (S160). The host-side update means 8 also notifies the guest-side synchronization means 1b through the session server 5 (first session server 5a, second session server 5b) of a content update event (S170).

Once the content update event transmitted from the host-side computer terminal 3 is received by the guest-side update means 12 of the guest-side synchronization means 1b via the session server 5 (first session server 5a, second session server 5b), the guest-side update means 12 will notify the guest-side content retrieving means 11 of the guest-side synchronization means 1b of the content update event.

Although the guest-side content retrieving means 11 will check to see whether the guest-side storage means 13 stores the contents corresponding to the appropriate content update event, the contents are not stored in the guest-side storage means 13 (usually the contents are not stored so the confirmation is not to be necessarily made), the guest-side content transmitting and receiving means 10 will make the send request of the contents in a question to the host-side synchronization means 1a via the session server 5 (first session server 5a, second session server 5b) (S180).

The host-side content transmitting and receiving means 6 which receives the content send request will retrieve the contents to be stored in the host-side storage means 9, and transfer the contents to the guest-side synchronization means 1 b via the session server 5 (first session server 5a, second session server 5b) (S190).

The guest-side content transmitting and receiving means 10 which receives the contents transferred from the host-side synchronization means 1 a via the session server 5 (first session server 5a, second session server 5b) will store the contents in the guest-side storage means 13 (S200).

Since the guest-side storage means 13 has stored new contents, the guest-side update means 12 will notify the guest-side content-acquiring means 11 of a content update event, and the guest-side content retrieving means 11 will retrieve the appropriate contents from the guest-side storage means 13 to display the contents on the guest-side computer terminal 4 by using known display means such as a web browser (S210).

By executing the process as stated above, the synchronization of contents may be achieved between the host-side computer terminal 3 and the guest-side computer terminal 4. In contrast to the prior art, when the content send request is transmitted from the host-side synchronization means 1 a to the web server 2, by including in the request the information for identifying the computer terminal running the synchronization process and the information for identifying the computer terminal which has sent the content display request (host-side computer terminal 3, guest-side computer terminal 4).

More specifically, the web server 2 may manage the situation in which the computer terminal which sends a content display request "http://www.mvp.jp/index.html" is the host-side computer terminal 3 ("User1@mvp.jp") and the synchronization process is running between the host-side computer terminal 3 "User1@mvp.jp" and the guest-side computer terminal 4 "User2@mvp.jp."

### SECOND EMBODIMENT

Another example will be described in which the synchronization process is running between the host-side synchronization means 1a and the guest-side synchronization means 1b, the content display request is sent from the guest-side synchronization means 1b to the host-side synchronization means 1 a, and the host-side synchronization means 1a then transmits a content send request to the web server 2.

To execute the synchronization process the respective users of the host-side computer terminal 3 and the guest-side computer terminal 4 will log in to the session server 5 from their respective synchronization system 1 (host-side synchronization means 1 a, guest-side synchronization means 1b), to establish a session between the session server 5 and the host-side computer terminal 3 served as the host side of the synchronization process and the guest-side computer terminal 4 served as the guest side of the synchronization process (S300). More specifically, the host-side computer terminal 3 establishes a session with the first session server 5a, while the guest-side computer terminal 4 establishes another session with the second session server 5b, and still another session is established between the first session server 5a and the second session server 5b so as to establish a session between the host-side computer terminal 3 and the guest-side computer terminal 4.

When the user of the guest-side computer terminal 4, for example, inputs a URL or selects a link, the guest-side content retrieving means 11 receives input of content display request of the input URL or link (S310). The content display request causes the guest-side content retrieving means 11 of the guest-side synchronization means 1 b to check to see whether the guest-side storage means 13 of the guest-side computer terminal 4 stores the contents corresponding to the input URL or link (S320).

If the guest-side storage means 13 does store the appropriate contents (S330), then the guest-side content retrieving means 11 will retrieve the contents from the guest-side storage means 13 to display on the guest-side computer terminal 4 by using known display means such as a web browser (S340). The guest-side update means 12 will notify the host-side synchronization means 1a through the session server 5 (first session server 5a, second session server 5b) of the content update event (S350).

When the host-side update means 8 receives the content update event, the host-side content retrieving means 7 will obtain the contents from the host-side storage means 9 (as the contents are synchronized between the host-side computer terminal 3 and the guest-side computer terminal 4, the contents to be stored in the guest-side computer terminal 4 is also stored in the host-side computer terminal 3) to display on the host-side computer terminal 3 by using known display means such as a web browser (S360).

As the result of the confirmation in step S320, if the guest-side storage means 13 does not store the contents (S330), then the guest-side content transmitting and receiving means 10 transmits a send request of the contents to the host-side synchronization means 1 a via the session server 5 (first session server 5a, second session server 5b) (S370). At this time the display request of the contents issued from the guest-side content retrieving means 11 of the guest-side computer terminal 4 is sent together with the request.

When the content send request from the guest-side synchronization means 1 b is received by the host-side content transmitting and receiving means 6, then the host-side content retrieving means 7 will check to see whether the host-side storage means 9 stores the contents corresponding to the content send request (S380).

If the contents are not present in the host-side storage means 9 (S390), then the host-side content transmitting and receiving means 6 of the host-side synchronization means 1a will transmit a content send request (HTTP request if the contents are in HTTP format) from the host-side synchronization means 1 a to the web server 2 corresponding to the input URL or selected link (5400). In the content send request, as shown in FIG 4, the information for identifying between which computer terminals the synchronization process is running, and which computer terminal (host-side computer terminal 3, guest-side computer terminal 4) has issued the content display request (may be distinguished based on the information that indicates that the guest-side content retrieving means 11 has received the input of content display request received from the guest-side computer terminal 4 in step S370) will be included in the content send request (HTTP request).

For the information shown in FIG 4, a typical case is shown in FIG 6 in which the information for identifying the host-side computer terminal 3 is "User1 @mvp.jp," the information for identifying the guest-side computer terminal 4 is "User2@mvp.jp," the computer terminal that has issued the content display request is "User2@mvp.jp," and the content send request is requesting the transfer of the contents having a URL "http:/AAwwmvpjpfindex.htnl" from the web server 2 to the host-side computer terminal 3.

In case of the content send request shown in FIG 6, the web server 2 will see "User1@mvp.jp" to the right of "SBR-Host-User" and recognize that the host-side computer terminal 3 or the user thereof in the synchronization process is "User1@mvp.jp"; the server will see "User2@mvp.jp" to the right of "SBR-Guest-User" then recognize that the guest-side computer terminal 4 or the user thereof in the synchronization process is "User2@mvp.jp"; and the server will see the string "User1@mvp.jp" to the right of "Request-SBR-User" and then recognize that the input of content display request is received in "User2@mvp.jp" in the same synchronization process. The server will also recognize that the contents subject to the synchronization process is "http://www.mvp.jp/index.html." The web server 2 then will store the information thus identified.

In step S400, the web server 2 having received the content send request transmitted from the host-side synchronization means 1 a will extract the contents corresponding to the content send request to send them to the host-side synchronization means 1 a. When the content send request is received, the web server 2 will store the information for identifying between which computer terminals the synchronization process is running and which of computer terminals (host-side computer terminal 3, guest-side computer terminal 4) has issued the content display request. The server can thereby manage what contents are sent to which computer terminal, and which computer terminal (host-side computer terminal 3, guest-side computer terminal 4) requested the content display request.

When the host-side content transmitting and receiving means 6 of the host-side synchronization means 1 a receives the contents transmitted from the web server 2 (S410), then the contents will be stored in the host-side storage means 9.

Since the host-side storage means 9 has stored new contents, the host-side update means 8 will notify the host-side content retrieving means 7 of a content update event, the host-side content retrieving means 7 receiving the event in tum retrieve the appropriate contents from the host-side storage means 9 to display the contents on the host-side synchronization means 1a by using known display means such as a web browser (S420). The host-side update means 8 will further notify the guest-side synchronization means 1 b of a content update event by way of the session server 5 (first session server 5a, second session server 5b) (S430).

Once the content update event transmitted from the host-side synchronization means 1a is received by the guest-side update means 12 of the guest-side synchronization means 1b via the session server 5 (first session server 5a, second session server 5b), the guest-side update means 12 will notify the guest-side content retrieving means 11 of the guest-side synchronization means 1 b of the content update event.

Although the guest-side content retrieving means 11 will confirm whether the guest-side storage means 13 stores the contents corresponding to the appropriate content update event, but since the contents are not stored in the guest-side storage means 13 (the confirmation is not necessarily required because the absence of the contents is checked in step S320), the guest-side content transmitting and receiving means 10 will make the send request of the contents in question to the host-side synchronization means 1 a via the session server 5 (first session server 5a, second session server 5b) (S440).

The host-side content transmitting and receiving means 6 which receives the content send request will retrieve the contents to be stored in the host-side storage means 9, and transfer the contents to the guest-side synchronization means 1 b via the session server 5 (first session server 5a, second session server 5b) (S450).

The guest-side content transmitting and receiving means 10 which receives the contents transferred from the host-side synchronization means 1a via the session server 5 (first session server 5a, second session server 5b) will store the contents in the guest-side storage means 13 (S460).

Since the guest-side storage means 13 has stored new contents, the guest-side update means 12 will notify the guest-side content-acquiring means 11 of a content update event, and the guest-side content retrieving means 11 will retrieve the appropriate contents from the guest-side storage means 13 to display the contents on the guest-side computer terminal 4 by using known display means such as a web browser (S470).

By executing the process as stated above, the synchronization of contents may be achieved between the host-side computer terminal 3 and the guest-side computer terminal 4 in the same manner as the first embodiment. In contrast to the prior art, when the content send request is transmitted from the host-side computer terminal 3 to web server 2, the web server 2 may manage separately to which computer terminal the contents are sent, and from which computer terminal the content display request is coming, by including the information for identifying the computer terminals running the synchronization process and the information for identifying the computer terminal which has sent the content display request (host-side computer terminal 3, guest-side computer terminal 4) into the request.

More specifically, the web server 2 may manage the situation so that the computer terminal which sends a content display request "http://www.mvp.jp/index.html" is the guest-side computer terminal 4 ("User2@mvp.jp") and so that the synchronization process is running between the host-side computer terminal 3 "User1@mvp.jp" and the guest-side computer terminal 4 "User2@mvp.jp."

### THIRD EMBODIMENT

Another example will be described in which the information for identifying the computer terminals running the synchronization process and the information for identifying the computer terminal that has issued the content display request (host-side computer terminal 3, guest-side computer terminal 4) are included in the content send request (HTTP request) transmitted from the host-side synchronization means 1a to the web server 2, in the same manner as in the first and second preferred embodiments, and in which the web server 2 makes use of the information for transferring the contents.

If the contents are for an online purchase of a commodity, used in a customer call center, the web server 2 will transfer to the host-side synchronization means 1a the contents having a purchase button embedded for deciding a purchase application of a commodity. The contents having such a button will be displayed on both the host-side computer terminal 3 and the guest-side computer terminal 4 because the synchronization process is running.

In such a call center, the purchase decision button must be selected by the customer purchasing the commodity. If the purchase button is selected in the computer terminal (guest-side computer terminal 4) used by a customer, the content display request of confirming the selection will be sent through the session server 5 to the computer terminal (host-side computer terminal 3) used by an operator in the call center. The information is included in the content send request transmitted from the computer terminal (host-side computer terminal 3) used by the operator in the call center to the web server 2, for indicating that the synchronization process is running between the computer terminal (host-side computer terminal 3) used by the operator and the computer terminal (guest-side computer terminal 4) used by the customer and that the content display request is originated from the computer terminal used by the customer (guest-side computer terminal 4), for sending from the host-side computer terminal 3.

The web server 2, which receives the content send request that includes such information, will confirm that the information as stated above is included in the content send request, and determine that the purchase application is authentic if the content display request is originated from the computer terminal used by the customer (guest-side computer terminal 4). The server will then send the contents that confirm the application to the host-side computer terminal 3. If otherwise the content display request is originated from the computer terminal used by the operator (host-side computer terminal 3), then the server will determine that the application is not valid, and will send to the host-side computer terminal 3 the contents forbidding the operation by the operator.

By providing the web server 2 with a means for determining whether or not the display request of the contents is originated from an authority, based on the information for identifying the computer terminal (host-side computer terminal 3, guest-side computer terminal 4) having issued the content display request included in the content send request, any fraudulent application along with the synchronization process may be prevented from occurring.

In addition, as stated above, since the web server 2 may manage separately the computer terminal or the user thereof that has applied the purchase of a commodity in the synchronization process, the web server 2 may record the history and analyze the entries of the record to perceive any preference of each individual by the web server 2 by using the methodology of known marketing analysis (which commodity is purchased when, or what kind of commodities is often purchased), allowing the web server 2 to send contents that offer some information on the special items along with the contents requested by the content send request, to the user of the host-side computer terminal 3 or to the user of the guest-side computer terminal 4. Another purchase of a commodity may thereby be more easily encouraged.

### FOURTH EMBODIMENT

Another use in the web server 2, which is different from the use in the third embodiment, will be described in which specific contents are transmitted or the selection made by one user is made known to another user when the users of the computer terminals running the synchronization process (host-side computer terminal 3, guest-side computer terminal 4) have consented.

In this case, the content send request transmitted from the host-side synchronization means 1a to the web server 2 is transmitted including the information for identifying the computer terminal which first has issued the content display request (host-side computer terminal 3 or guest-side computer terminal 4). The web server 2 is provided with means which, upon reception, will wait until it receives the content send request, which includes information that indicates that the other computer terminal involved in the synchronization process in relation to the computer terminal that issued the above-descnbed content display request has issued a content display request, and will then transmit the contents to the host-side computer terminal 3 only when it receives the content send request that includes information that indicates that the content display request has originated from the other computer terminal.

Alternatively, another means may be provided to the web server 2 which, after having received at the web server 2 the content send request transmitted that includes the information for identifying the computer terminal (the host-side computer terminal 3 or the guest-side computer terminal 4), which first has issued the content display request to the content send request transmitted from the host-side synchronization means 1a to the web server 2, will send the contents informing the user of the other computer terminal that one user has selected an item, stating for example that "Customer A agreed the purchase of this commodity, Will you agree, Customer B?"

With this arrangement, the web server 2 is allowed to transmit the appropriate contents after confirming the agreement of the both parties or the intention of both users.

### FIFTH EMBODIMENT

In each of the examples described above, the host-side synchronization means 1a and the guest-side synchronization means 1b may be configured by causing the host-side computer terminal 3 and the guest-side computer terminal 4 to read as a synchronization program a function the implements the host-side synchronization means 1a and the guest-side synchronization means 1b

More specifically, the synchronization program which records the contents of the process by the host-side synchronization means 1a and the guest-side synchronization means 1b may be recorded on a recording medium such as a CD or DVD, then may be read by the host-side computer terminal 3 and the guest-side computer terminal 4 to implement the host-side synchronization means 1 a and the guest-side synchronization means 1b. Examples of recording media for providing the program include a magnetic disk, a hard disk, an optical disk, a magnetooptical disk, a magnetic tape, and a nonvolatile memory card.

In this case the host-side synchronization program comprises a function (may host-side synchronization means 1a and the guest-side synchronization means 1 b be referred to as a module or a program) for executing the host-side content transmitting and receiving means 6 on the host-side computer terminal 3, a function for executing the host-side content retrieving means 7 on the host-side computer terminal 3, and a function for executing the host-side update means 8 on the host-side computer terminal 3. The host-side computer terminal 3 in this situation has its host-side storage means 9 for storing the contents (a memory, cache, hard disk, or other recording medium) and prooessing/computation means for executing the process of the host-side synchronization program (CPU, register, or other computing device).

On the other hand, the guest-side synchronization program comprises a function for executing the guest-side content transmitting and receiving means 10 on the guest-side computer terminal 4, a function for executing the guest-side content retrieving means 11 on the guest-side computer terminal 4, and a function for executing the guest-side update means 12 on the guest-side computer terminal 4. The guest-side computer terminal 4 in this situation has guest-side storage means 13 for storing the contents (a memory, cache, hard disk, or other recording medium) and processing/computation means for executing the process of the guest-side synchronization program (CPU, register, or other compu6ng device).

When the recording medium storing the host-side synchronization program is set in the host-side computer terminal 3 and once the host-side synchronization program is loaded from the recording medium to the host-side computer terminal 3, functions for executing the host-side content transmitting and receiving means 6, the host-side content retrieving means 7, and the host-side update means 8 are read into the processor means of the host-side computer terminal 3.

When the recording medium storing the guest-side synchronization program is set in the guest-side computer terminal 4 and once the guest-side synchronization program is loaded from the recording medium to the guest-side computer terminal 4, functions for executing the guest-side content transmitting and receiving means 10, the guest-side content retrieving means 11, and the guest-side update means 12 are read into the processor means of the guest-side computer terminal 4.

Means loaded into the processor means will execute either the process described in the above first embodiment if the user of the host-side computer terminal 3 issues a content display request, or the process described in the above second embodiment if the user of the guest-side computer terminal 4 issues a content display request, so as to enable the synchronization process to be performed between the host-side computer terminal 3 and the guest-side computer terminal 4.

Alternatively, the host-side synchronization program and the guest-side synchronization program may be downloaded to the host-side computer terminal 3 or the guest-side computer terminal 4 from a predetermined server through a network to be loaded therein. The programs will properly function in a same manner as the above description.

The host-side synchronization program and the guest-side synchronization program may also be in the form of plug-ins to be loaded into known display means such as a web browser previously provided in the host-side computer terminal 3 and the guest-side computer terminal 4.

Means in accordance with the present invention are merely designated by their logical function, and they may share virtually or physically the same area.

It is apparent that the functionality of the above embodiments may be achieved not only by executing the program loaded to a computer terminal, but also the functionality of the embodiments described above may be achieved based on the instruction of the program by executing all or a part of process by the operating system running on the computer terminal.

It is also apparent that the program read out from a recording medium may be written to a nonvolatile or volatile storage means equipped in an expansion card inserted into the computer terminal or in an expansion unit connected to the computer terminal, and all or a part of the actual process is thereafter executed by the processing unit equipped in the expansion card or expansion unit on the basis of the instruction of the program to thereby achieve the functionality of the embodiment described above.

### INDUSTRIAL APPLICABILITY

In accordance with the present invention, the web server 2 may manage separately between which computer terminals the synchronization process is running and from which computer terminal the content display request is originated. In the case in which a customer call center uses the synchronization program, for example, it is easier to thereby determine from which computer terminal a purchase decision of a commodity is originated, allowing trouble to be prevented.

Using the present invention enables the web server 2 to record the history for each computer terminal or each user that refers to the contents and to analyze the entries of the history to ascertain the preference of each individual, thereby allowing the user to be presented with specially offered items and to encourage the purchase of the next forthcoming commodity.

## Claims

1. A synchronization system for synchronizing the contents stored in a web server between a host-side computer terminal and at least one or more guest-side computer terminals through at least one or more session servers, **characterized by**
said host-side computer terminal comprising
host-side synchronization means for transmitting to said web server a send request of said contents including the information for identifying which of said computer terminals has made a content display request which is a request for displaying said contents on a computer terminal, for receiving the contents corresponding to the send request of said contents from said web server, and for transmitting said received contents to said guest-side computer terminal through session server; and
said guest-side computer terminal comprising
guest-side synchronization means for receiving said contents from said guest-side computer terminal through said session server, and for displaying said received contents on said guest-side computer terminal.

2. The synchronization system in accordance with claim 1, **characterized in that**
said host-side synchronization means includes in said content send request,
information for identifying said host-side computer terminal or the user of said host-side computer terminal as the information for identifying which of said computer terminals has made the request when the input of said content display request has been received at said host-side computer terminal, and
information for identifying said guest-side computer terminal or the user of said guest-side computer terminal as the information for identifying which of said computer terminals has made the request when the input of said content display request has been received at said guest-side computer terminal.

3. The synchronization system in accordance with claim 1 or 2, **characterized in that**
said host-side synchronization means further includes in said content send request the information for identifying said host-side computer terminal or the user thereof and the information for identifying said guest-side computer terminal or the user thereof as the information of computer terminals running the synchronization process.

4. A synchronization system for performing a synchronization process of the contents stored in a web server between a host-side computer terminal and at least one or more guest-side computer terminals through at least one or more session servers, **characterized in that**
said host-side computer terminal has host-side storage means for storing said contents, and host-side synchronization means consisting of host-side content transmitting and receiving means, host-side content retrieving means, and host-side update means;
said guest-side computer terminal has guest-side storage means for storing said contents, and guest-side synchronization means consisted of guest-side content transmitting and receiving means, guest-side content retrieving means, and guest-side update means;
said host-side content transmitting and receiving means is means for transmitting a send request of said contents including the information for identifying which of said computer terminals has made a content display request which is a request for displaying said contents on a computer terminal to said web server, for receiving the contents corresponding to said content send request from said web server to store in said host-side storage means, and for transmitting said contents to said guest-side synchronization means;
said host-side update means is means for notifying said host-side content retrieving means and said guest-side synchronization means of a content update event indicating that said host-side storage means has stored new contents;
said host-side content retrieving means is means for obtaining the contents stored in said host-side storage means, upon reception of said content update event, to display on said host-side computer terminal;
said guest-side content transmitting and receiving means is means for receiving said contents from said host-side synchronization means to store in said guest-side storage means;
said guest-side update means is means for notifying said guest-side content retrieving means of a content update event indicating that said guest-side storage means has stored new contents; and
said guest-side content retrieving means is means for obtaining the contents stored in said guest-side storage means, upon reception of said content update event, to display on said guest-side computer terminal.

5. The synchronization system in accordance with claim 4, **characterized in that**
said host-side content transmitting and receiving means includes in said content send request the information for identifying said host-side computer terminal or the user of said host-side computer terminal as the information for identifying which of said computer terminals has made the request when receiving the input of said content display request at said host-side computer terminal, and the information for identifying said guest-side computer terminal or the user of said guest-side computer terminal as the information for identifying which of said computer terminals has made the request when receiving the input of said content display request at said guest-side computer terminal.

6. The synchronization system in accordance with claim 4 or claim 5, **characterized in that**
said host-side content transmitting and receiving means further includes the information for identifying said host-side computer terminal or the user thereof and the information for identifying said guest-side computer terminal or the user thereof as the information relating to the computer terminals running the synchronization process.

7. A host-side computer terminal used in a synchronization system for running a synchronization process of the contents to be stored in a web server between a host-side computer terminal and at least one or more guest-side computer terminals through at least one or more session servers, **characterized by**
said host-side computer terminal comprising host-side synchronization means for transmitting to said web server the send request of said contents including the information for identifying which computer terminal has made the content display request which is a request for displaying said contents on a computer terminal, for receiving the contents corresponding to the send request of said contents from said web server, for displaying said contents on said host-side computer terminal, and for transmitting said received contents to said guest-side computer terminal through said session server, and
said contents received from said host-side computer terminal being displayed on said guest-side computer terminal.

8. The host-side computer terminal used in a synchronization system in accordance with claim 7, **characterized in that**
said host-side synchronization means includes in said contents the information for identifying said host-side computer terminal or the user of said host-side computer terminal as the information for identifying which of said computer terminals has made the request when receiving the input of said content display request at said host-side computer terminal, and the information for identifying said guest-side computer terminal or the user of said guest-side computer terminal as the information for identifying which of said computer terminals has made the request when receiving the input of said content display request at said guest-side computer terminal.

9. The host-side computer terminal used in a synchronization system in accordance with claim 7 or 8, **characterized in that**
said host-side synchronization means further includes the information for identifying said host-side computer terminal or the user thereof and the information for identifying said guest-side computer terminal or the user thereof as the information on the computer terminals running the synchronization process.

10. A host-side computer terminal used in a synchronization system running a synchronization process of contents to be stored in a web server between a host-side computer terminal and at least one or more guest-side computer terminals through at least one or more session servers, **characterized in that**
said host-side computer terminal has host-side storage means for storing said contents, and host-side synchronization means comprising host-side content transmitting and receiving means, host-side content retrieving means, and host-side update means;
said host-side content transmitting and receiving means is means for transmitting to said web server a send request of said contents including the information for identifying which computer terminal has made a content display request which is a request for displaying said contents on a computer terminal, for receiving the contents corresponding to the send request of said contents from said web server to store in said host-side storage means, and for transmitting said contents to said guest-side synchronization means;
said host-side update means is means for notifying said host-side content retrieving means and said guest-side synchronization means of a content update event indicating that said host-side storage means has stored new contents;
said host-side content retrieving means is means for retrieving the contents stored in said host-side storage means, upon reception of said content update event, to display on said host-side computer terminal; and
said contents received from said host-side computer terminal being displayed on said guest-side computer terminal.

11. The host-side computer terminal used in a synchronization system in accordance with claim 10, **characterized in that**
said host-side content transmitting and receiving means includes the information for identifying said host-side computer terminal or the user of said host-side computer terminal as the information for identifying which of said computer terminals has made the request when receiving the input of said content display request at said host-side computer terminal, and the information for identifying said guest-side computer terminal or the user of said guest-side computer terminal as the information for identifying which of said computer terminals has made the request when receiving the input of said content display request at said guest-side computer terminal.

12. The host-side computer terminal used in a synchronization system in accordance with claim 10 or 11, **characterized in that**
said host-side content transmitting and receiving means further includes in said content send request the information for identifying said host-side computer terminal or the user thereof and the information for identifying said guest-side computer terminal or the user thereof as the information on the computer terminals running the synchronization process.

13. A synchronization program, comprising a host-side synchronization program and a guest-side synchronization program, for executing a synchronization process of the contents to be stored in a web server, between a host-side computer terminal and at least one or more guest-side computer terminals through at least one or more session servers, **characterized in that**
said host-side computer terminal comprises host-side storage means for storing said contents, and host-side processor unit means for executing the processing by loading said host-side synchronization program;
said guest-side computer terminal comprises guest-side storage means for storing said contents, and guest-side processor unit means for executing the processing by loading said guest-side synchronization program;
said host-side synchronization program comprises a host-side content transmitting and receiving function, a host-side content retrieving function, and a host-side update function, to be loaded in said host-side processor unit;
said guest-side synchronization program comprises a guest-side content transmitting and receiving function, a guest-side content transmitting and receiving function, and a guest-side update function, to be loaded in said guest-side processor unit;
said host-side content transmitting and receiving function is a function for transmitting to said web server a send request of said contents including the information for identifying which computer terminal has made a content display request which is a request for displaying said contents on a computer terminal, for receiving the contents corresponding to the send request of said contents from said web server to store in said host-side storage means, and for transmitting said contents to said guest-side computer terminal;
said host-side update function is a function for notifying said host-side content retrieving function and said guest-side computer terminal of a content update event indicating that said host-side storage means has stored new contents;
said host-side content retrieving means is a function for retrieving the contents stored in said host-side storage means upon reception of said content update event to display on said host-side computer terminal;
said guest-side content transmitting and receiving function is a function for receiving said contents from said host-side computer terminal to store in said guest-side storage means;
said guest-side update means is a function for notifying said guest-side content retrieving means of a content update event indicating that said guest-side storage means has stored new contents;
said guest-side content retrieving means is a function for retrieving the contents stored in said guest-side storage means upon reception of said content update event to display on said guest-side computer terminal.

14. The synchronization program in accordance with claim 13, **characterized in that**
said host-side content transmitting and receiving function further includes in said content send request the information for identifying said host-side computer terminal or the user of said host-side computer terminal as the information for identifying which of said computer terminals has made the request when receiving the input of said content display request at said host-side computer terminal, and the information for identifying said guest-side computer terminal or the user of said guest-side computer terminal as the information for identifying which of said computer terminals has made the request when receiving the input of said content display request at said guest-side computer terminal:

15. The synchronization program in accordance with claim 13 or 14, **characterized in that**
said host-side content transmitting and receiving function further includes in said content send request the information for identifying said host-side computer terminal or the user thereof and the information for identifying said guest-side computer terminal or the user thereof as the information on the computer terminals running a synchronization process.

16. A recording medium on which the synchronization program of any of claims 13 to 15 is stored.

17. A host-side synchronization program for operating a host-side computer terminal for executing a synchronization process of the contents to be stored in a web server between said host-side computer terminal and at least one or more guest-side computer terminals through at least one or more session servers,
**characterized in that**
said host-side computer terminal has host-side storage means for storing said contents, and host-side processor unit means for executing the processing by loading said host-side synchronization program;
said host-side synchronization program comprises a host-side content transmitting and receiving function, a host-side content retrieving function, and a host-side update function to be loaded into said host-side processor unit;
said host-side content transmitting and receiving function is a function for transmitting to said web server a send request of said contents including the information for identifying which computer terminal has made a content display request which is a request for displaying said contents on a computer terminal, for receiving the contents corresponding to said content send request from said web server to store in said host-side storage means, and for transmitting said contents to said guest-side computer terminal;
said host-side update function is a function for notifying said host-side content retrieving function and said guest-side computer terminal of a content update event indicating that said host-side storage means has stored new contents;
said host-side content retrieving function is a function for retrieving the contents stored in said host-side storage means, upon reception of said content update event, to display on said host-side computer terminal;
said guest-side content transmitting and receiving function is a function for receiving said contents from said host-side computer terminal to store in said guest-side storage means; and
said contents received from said host-side computer terminal being displayed on said guest-side computer terminal.

18. The host-side synchronization program in accordance with claim 17,
**characterized in that**
said host-side content transmitting and receiving function includes in said content send request the information for identifying said host-side computer terminal or the user of said host-side computer terminal as the information for identifying which of computer terminals has made the request when receiving the input of said content display request at said host-side computer terminal, and the information for identifying said guest-side computer terminal or the user of said guest-side computer terminal as the information for identifying which of said computer terminals has made the request when receiving the input of said content display request at said guest-side computer terminal.

19. The host-side synchronization program in accordance with claim 17 or 18, **characterized in that**
said host-side content transmitting and receiving function further includes the information for identifying said host-side computer terminal or the user thereof and the information for identifying said guest-side computer terminal or the user thereof as the information on the computer terminals running the synchronization process.

20. A recording medium on which the host-side synchronization program in accordance with any of claims 17 to 19 is stored.
